# EUROPÄISCHE PATENTSCHRIFT

(11) **EP 1 272 830 B1**
(45) Veröffentlichungstag und Bekanntmachung des Hinweises auf die Patenterteilung: **14.09.2016**
(21) Anmeldenummer: 01989048.2
(22) Anmeldetag: 15.12.2001
(51) Int. Cl.: G01N 21/90, G06T 7/00

(54) **INSPEKTIONSVORRICHTUNG UND -VERFAHREN**
INSPECTION METHOD AND DEVICE
DISPOSITIF ET PROCEDE DE CONTROLE

(30) Priorität: 30.12.2000 DE 10065321
(43) Veröffentlichungstag der Anmeldung: 08.01.2003
(73) Patentinhaber: Krones AG, 93068 Neutraubling (DE)
(72) Erfinder: WERZINGER, Lothar, 93059 Regensburg (DE)
(74) Vertreter: Grünecker Patent- und Rechtsanwälte PartG mbB
(86) Internationale Anmeldenummer: PCT/EP2001/014848
(87) Internationale Veröffentlichungsnummer: WO 2002/054050

(56) Entgegenhaltungen:
- EP-A2- 0 472 881
- DE-A- 19 646 694
- US-A- 5 245 399

## Beschreibung

Die Erfindung betrifft ein Verfahren zur Überprüfung des korrekten Funktionierens des Inspektionsvorgangs von Gefäßen mit den Merkmalen des Oberbegriffs des Anspruchs 1 und eine Inspektionsvorrichtung mit den Merkmalen des Oberbegriffs des Anspruchs 6.

Flaschenabfülllinien umfassen üblicherweise (vgl. z.B. DE-OS 19624552) Inspektionssysteme für zu befüllende Leerflaschen. Dabei durchlaufen auf einem Fließband positionierte Flaschen nacheinander einzelne Inspektionseinrichtungen bzw. -module zur Erfassung bestimmter Fehler (Fremdkörper, Restflüssigkeit, Beschädigungen, Materialspannungen etc.) der Flaschen, so dass beschädigte Flaschen aus den Abfülllinien ausgesondert werden können (siehe z.B. Druckschrift DE 196 46 694 A).

Im speziellen können die einzelnen Inspektionsmodule jeweils eine Kamera umfassen, die ein Einzelbild einer gerade vorbei transportierten Glasflasche aufnimmt, wobei die Abbildungsoptik der Kamera so gewählt und angeordnet ist, dass z.B. eine Seitenwand- oder eine Bodeninspektion durchgeführt werden kann.

Ein an eine solche Kamera angeschlossenes Bildauswertungssystem, das ein auf einem Rechner laufendes Bildverarbeitungsprogramm verwendet, wertet die erfassten Einzelbilddaten aus und gibt gegebenenfalls ein Fehlersignal an eine Auswurfeinrichtung ab, um eine als fehlerhaft erkannte Flasche automatisch vom Transportband auswerfen zu lassen.

Die Bildauswertung erfolgt dabei bei einer bestimmten Parametereinstellung des Bildauswertungsprogramms, die automatisch oder durch eine Bedienperson manuell während der Auswertung oder bei Auswertungspausen eingestellt bzw. , geändert werden kann.

Diese Inspektionseinrichtungen können im Laufe der Zeit allerdings sich verändernde Reaktionscharakteristiken aufweisen, so dass es erforderlich ist, in einem bestimmten Zeitabschnitt alle Funktionen zu überprüfen und gegebenenfalls eine entsprechende Nachjustierung der einzelnen Inspektionseinrichtungen vorzunehmen.

Dabei werden üblicherweise automatisch oder von Hand in bestimmten Zeitabständen Testflaschen in den Flaschenstrom eingereiht, die zuvor so präpariert wurden, dass sie bei einem korrekten Funktionieren der Inspektionsmodule als fehlerhaft erkannt werden. Falls diese Testflaschen nicht als fehlerhaft erkannt werden, ist das zugehörige Inspektionsmodul fehlerhaft, z.B. defekt oder dejustiert.

Dies kann zum einen an einer Verschmutzung der Optik oder einem Versagen einzelner Komponenten der Erkennungselektronik, andererseits auch an einer Dejustage der eingestellten Parameter des Bildauswertungsprogramms liegen. Solche Kontrollsysteme sind beispielsweise aus dem deutschen Gebrauchsmuster Nr. 299 10 452.4, das ein gattungsgemäßes Verfahren und eine gattungsgemäße Vorrichtung offenbart, bekannt. Diesbezüglich sei ferner auf die Druckschriften DE 196 46 694 A1 bzw. DE 43 02 656 C2 verwiesen.

Testflaschen können nachteiligerweise im Laufe der Zeit durch häufige Benutzung ihre ursprünglichen Eigenschaften verändern. Ferner kann die Erkennungssicherheit von Testflaschen von deren zufälligen Drehstellung auf dem Transporteur der Inspektionsmaschine abhängen. Die mit bekannten Testflaschen erreichbaren Ergebnisse sind daher prinzipbedingt nur schlecht reproduzierbar und nicht ausreichend miteinander vergleichbar. Es handelt sich nur um einfache erkannt/nicht erkannt Tests, die keine qualitativen Aussagen erlauben.

Die Druckschriften DE 2 166 235 bzw. DE 33 30 817 A1 beschreiben alternativ, dass nicht unbedingt vorpräparierte Testflaschen, sondern auch andere künstliche Fehlerquellen in den Strahlengang der Inspektionsmodule eingebracht werden können, um das korrekte Funktionieren des Inspektionsvorgangs zu überprüfen.

Allerdings besteht die Möglichkeit, dass in der Praxis, insbesondere von nicht ausreichend geschulten Bedienpersonen, die Programmparameter der Bildauswertungsprogramme teilweise so verstellt werden, dass die Empfindlichkeit der Erkennung von Fehlern über ein unzulässiges Maß vermindert wird. Es kann folglich zu Fällen kommen, in denen Fehler an Flaschen, wie z.B. Scheuerringe im äußeren Rumpfbereich der Flaschen, weniger wahrscheinlich erkannt werden, so dass die Aussortierrate an defekten Flaschen vermindert ist.

Es ist deshalb die Aufgabe der vorliegenden Erfindung, ein Verfahren und eine Vorrichtung zur Verfügung zu stellen, mit denen auf einfache Weise festgestellt werden kann, ob neben der grundsätzlichen Funktionsbereitschaft die Parametereinstellungen des Auswerturgsprogramms der Inspektions vorrichtung für eine gewünschte Wahrscheinlichkeit einer Fehlererkennung passend sind oder nicht.

Diese Aufgabe wird durch das Verfahren nach Anspruch 1 und die Inspektionsvorrichtung nach Anspruch 7 gelöst. Bevorzugte Ausführungsformen sind Gegenstand von Unteransprüchen.

Beim erfindungsgemäßen Verfahren, das zum Beispiel zur Inspektionskontrolle von Flaschen oder Dosen verwendet werden kann, werden Referenzbilddaten in das Auswertungsprogramm eingegeben, die strukturell den erfassten Bilddaten entsprechen und die von dem Auswertungsprogramm bei derselben Parametereinstellung des Auswertungsprogramms ausgewertet werden, die auch für das Auswerten der erfassten Bilddaten verwendet wird.

Bei der Kontrolle des Flascheninspektionsvorgangs entfällt somit die Notwendigkeit, erst umständlich einzelne Testflaschen oder sonstige künstliche Fehlerquellen in die Reihe der zu untersuchenden Flaschen einsortieren zu müssen, die zur Inspektion in den Strahlengang der optischen Inspektionsmodule transportiert werden.

Da gemäß der vorliegenden Erfindung z.B. lediglich Computerdaten als Referenzbilddaten in das Auswertungsprogramm eingegeben werden müssen, ist die Möglichkeit der Kontrolle des Funktionierens des Inspektionsvorgangs wesentlich erleichtert.

Die Analyse, ob die vorhandenen Parametereinstellungen des Auswertungsprogramms geeignet sind, einen gewünschten Erfolg beim Kontrollvorgang zu erzielen, kann mit Hilfe des erfindungsgemäßen Verfahrens weiterhin wesentlich exakter und präziser durchgeführt werden.

Dies ist dadurch begründet, dass durch die Möglichkeit der unmittelbaren Eingabe von Referenzbilddaten in das Auswertungsprogramm keine Fehlerquellen mehr bei der Auswertung berücksichtigt werden müssen, die mit der Einstellung und Justage des optischen Systems zum Erfassen der zu untersuchenden Gefäße zusammenhängen.

Infolgedessen wird eine Analyse der augenblicklichen Parametereinstellungen des Auswertungsprogramms möglich, ohne dass der momentane Zustand der optischen Komponenten der Inspektionsvorrichtung als mögliche Fehlerquelle eingeht.

Das erfindungsgemäße Verfahren ermöglicht überdies bessere reproduzierbare und vergleichbare Ergebnisse der Funktionsüberprüfung des Inspektionsvorgangs als die bekannten Verfahren, die zur Überprüfung der momentanen Funktionsfähigkeit der Inspektionsmodule Testflaschen in den Bereich dieser Module führen.

Im Falle von einer Seitenwandinspektion können aufgrund von Flaschendrehungen um ihre Längsachse unter Umständen die als Fehler zu erkennenden Markierungen auf den Testflaschen von der Abbildungsoptik der Seitenwandinspektionsmodule nicht erkannt werden.

Da erfindungsgemäß Referenzbilddaten verwendet werden, die beispielsweise Bildern von vorher aufgenommenen Testflaschen sein können, in denen die Fehlermarkierung korrekt zu erkennen ist, kann es zu solchen schlecht reproduzierbaren Ergebnissen nicht kommen.

Dies ist somit ein weiterer wesentlicher Vorteil der Verwendung von Referenzbilddaten von "fiktiven" Testflaschen, d.h. von solchen, die während der Funktionskontrolle tatsächlich nicht die Inspektionsvorrichtung durchlaufen.

Es sei darauf hingewiesen, dass der vorliegende Erfindungsgegenstand zwar an sich keine Verwendung von Testflaschen mehr erfordert, er allerdings auch dann vorteilhaft verwendet werden kann, wenn zur Funktionskontrolle insbesondere der optischen Komponenten der Inspektionsmodule weiterhin Testflaschen verwendet werden.

Das Merkmal, dass die Referenzbilddaten strukturell den erfassten Bilddaten entsprechen sollen, bedeutet im Sinne der vorliegenden Anmeldung, dass diese Referenzbilddaten zwar keine momentan vom optischen Inspektionssystem erfasste Bilddaten sind, aber eine ähnliche Datenstruktur haben, so dass sie ebenso wie die erfassten Bilddaten an sich von dem Auswertungsprogramm auswertbar sind.

Beispielsweise können die Referenzbilddaten Daten von Bildern von Testflaschen sein, die vor der Auslieferung der Inspektionsvorrichtung an den Kunden bereits mit dieser Inspektionsvorrichtung unter optimal eingestellten Bedingungen aufgenommen wurden.

Demgemäss werden als Referenzbilddaten bevorzugt Bilddaten von fehlerhaften Gefäßen verwendet.

Indem somit Bilddateien in das Auswertungsprogramm eingegeben werden können, die fehlerhafte Gefäße darstellen, ist es möglich, trotz des Verzichts auf ein Durchlaufenlassen von Testflaschen zum Zeitpunkt der Funktionskontrolle sicherer Aussagen über passende Parametereinstellungen des Auswertungsprogramms zu erhalten.

In einer bevorzugten Ausführungsform werden die Referenzbilddaten zur Eingabe in das Auswertungsprogramm per Datenfernübertragung zugeleitet.

In diesem Fall ist eine Ferndiagnose ermöglicht, ohne dass die Person, die die Funktionsanalyse durchführt, direkt am Ort der Inspektionsvorrichtung anwesend sein muss. Somit können beispielsweise von einer Zentrale aus durch Datenübertragung per Modem sich an anderen und unterschiedlichen Orten befindliche Inspektionsvorrichtungen überwacht werden.

Die zuständige Person in der Zentrale kann beispielsweise einzelne in einer Datenbank gespeicherte Referenzbilddaten von Aufnahmen von Testflaschen mit ganz speziellen Fehlern nehmen und diese per Datenfernübertragung einer der Inspektionsvorrichtungen zuführen. Die von dem dortigen zugehörigen Auswertungsprogramm ausgewerteten Daten könnten dann wiederum per Datenfernübertragung der zuständigen Person in der Zentrale zur Analyse übermittelt werden.

Deshalb ist der personelle Aufwand zur Durchführung der Kontrolle im Vergleich zu den bekannten Verfahren erheblich vermindert, bei denen teilweise noch eine Person vor Ort Testflaschen in die Reihe der an den Inspektionsmodulen vorbeizutransportierenden Flaschen einsetzen musste.

Weiterhin ist bevorzugt, dass die Referenzbilddaten in einem nicht-flüchtigen Speicher eines Rechners vorgespeichert werden, auf den das Auswertungsprogramm bei der Auswertung zugreift.

In diesem Fall können beispielsweise die Referenzbilddaten von vorher aufgenommenen Flaschen auf dem Rechner zwischengespeichert werden, auf dem auch das Auswertungsprogramm läuft, nachdem diese Referenzbilddaten per Datenfernübertragung zugeleitet wurden. Die Auswertung dieser Referenzdaten muss hierbei nicht unmittelbar nach der Datenzuleitung erfolgen, sondern kann auch zeitlich verzögert, z.B. in einer Pause des laufenden Inspektionsvorgangs erfolgen.

Alternativ könnten die Referenzbilddaten bei der Auslieferung der zugehörigen Inspektionsvorrichtung an einen Kunden auch bereits auf dem Rechner mit dem Auswertungsprogramm vorgespeichert sein.

Die durch das erfindungsgemäße Verfahren gegebene Möglichkeit zur Analyse der Parametereinstellung des Auswertungsprogramms unter der Verwendung von Referenzbilddaten, die die laufende Einschleusung von Testflaschen oder dergleichen zur Funktionskontrolle überflüssig machen, kann zudem zur Feststellung und Dokumentation des Geeignetseins der bestehenden Parametereinstellungen verwendet werden.

In einer vorteilhaften Ausführungsform wird die Parametereinstellung des Auswertungsprogramms in Abhängigkeit von dem Auswertungsergebnis der Referenzbilddaten geändert.

Beispielsweise können somit nicht nur per Datenfernübertragung Referenzbilddaten in eine Inspektionsvorrichtung zugeleitet und ausgewertet und die ausgewerteten Daten wieder zurück übertragen werden, sondern anschließend auch beim Vorhandensein einer nicht optimal passenden Parametereinstellung diese selbsttätig oder wiederum per Datenfernübertragung im Auswertungsprogramm geändert werden.

Um den an sich üblichen Betriebsablauf der laufenden Inspektion der an den Inspektionsmodulen vorbeitransportierten Gefäße nicht zu stören, kann weiterhin die Auswertung der Referenzbilddaten durch das Auswertungsprogramm zumindest teilweise oder vollständig zeitlich dann erfolgen, wenn die optisch erfassten Bilddaten nicht mit dem Auswertungsprogramm ausgewertet werden.

Die erfindungsgemäße Inspektionsvorrichtung ist durch eine Einrichtung zur Eingabe von Referenzbilddaten in das Auswertungsprogramm gekennzeichnet, die strukturell den durch die Messeinheit erfassten Bilddaten entsprechen, um diese mit dem Auswertungsprogramm bei derselben Parametereinstellung auszuwerten, die auch für das Auswerten der durch die Messeinheit erfassten Bilddaten verwendet wird.

Diese empfindungsgemäße Vorrichtung und die weiteren Ausführungsformen, die in den abhängigen Ansprüchen definiert sind, haben u.a. auch die Vorteile, die vorstehend in Bezug auf die zugehörigen Verfahrensansprüche geschildert wurden.

Wenn die Referenzbilddaten vor der Auslieferung der Inspektionsvorrichtung an den Kunden beispielsweise in einem ROM-Speicher des Rechners vorgespeichert werden, kann zudem ein unbeabsichtigtes Löschen dieser Daten verhindert werden.

Die Erfindung wird im Folgenden anhand der einzigen beiliegenden Figur näher erläutert und beschrieben werden. Dabei zeigt diese Figur eine schematische, prinzipielle Ansicht einer Ausführungsform einer erfindungsgemäßen Inspektionsvorrichtung, die zur Durchführung einer Ausführungsform des erfindungsgemäßen Verfahrens verwendet werden kann.

Dabei befindet sich im Bereich des durch die Umrisslinie 1 angedeuteten Fabrikgeländes eine Leerflascheninspektionsanlage, um fehlerhafte Flaschen zu erkennen. Die Flaschen 2 werden dabei auf einem Laufband 3 positioniert und in Richtung B auf dem Laufband 3 transportiert. Der besseren Anschaulichkeit halber sind nur zwei der auf dem Laufband befindlichen Flaschen dargestellt.

Im Verlauf des Laufbandes 3 ist ein Inspektionsmodul 4 als Inspektionsvorrichtung so angebracht, dass die auf dem Laufband 3 beförderten Flaschen 2 jeweils einzeln das Inspektionsmodul 4 durchlaufen. Das Inspektionsmodul 4 umfasst eine Kamera 5 mit zugehöriger Belichtungs- und Abbildungsoptik, um den Halsbereich der darunter vorbeitransportierten Flaschen 2 optisch aufzunehmen. Selbstverständlich könnte das Inspektionsmodul 5 nicht nur zur Kontrolle des Halsbereiches, sondern beispielsweise auch als Modul zur Seitenwandkontrolle oder Bodeninspektion ausgestaltet und angebracht sein.

In an sich üblicher Weise ist die Abbildungskamera 5 über eine Signalleitung 6 mit einem schematisch dargestellten Auswertungsrechner 7 verbunden. Dieser Auswertungsrechner 7 umfasst unter anderem in üblicher Weise eine nicht dargestellte Eingabetastatur und ist mit einem zugeordneten Monitor zur Darstellung von Grafiken und Texten verbunden.

Auf einer Festplatte 8 oder einem anderen Datenspeicher des Rechners 7 ist ein Bildauswertungsprogramm installiert, das zur Auswertung der durch die Kamera 5 erfassten Bilddaten der inspizierten Flaschen 2 dient. Diese Auswertung erfolgt üblicherweise bei einer vorgegebenen und veränderbaren Einstellung der Parameter des Auswertungsprogramms. Zusätzlich zur Festplatte 8 umfasst der Rechner 7 noch einen ROM-Speicher 9, in den Referenzbilddaten nicht löschbar abgespeichert sind.

Weiterhin umfasst der Auswertungsrechner 7 einen Anschluss mit Schnittstelle 10. Dieser dient dazu, per Datenfernübertragung unter anderem Referenzbilddaten in den beschreibbaren Speicher des Rechners 7 einzugeben, um diese Daten unmittelbar oder nach einem gewissen Zeitabstand durch das Auswertungsprogramm auswerten zu lassen.

Diesbezüglich kann beispielsweise an einem anderen Ort (beispielsweise beim Hersteller der Maschine), der schematisch durch die Umgrenzungslinie 11 symbolisiert ist, ein weiterer Rechner 12 vorhanden sein. Dieser Rechner 12 umfasst z.B. ebenfalls einen Anschluss mit Schnittstelle 13 zur Datenfernübertragung. Die beiden Rechner 7 und 12 an den unterschiedlichen Orten 1, 11, sind durch eine schematisch angedeutete Leitung 14, beispielsweise eine Modemverbindung 14, miteinander verbindbar, um Daten vom Rechner 12 auf den Rechner 7 und umgekehrt zu übertragen.

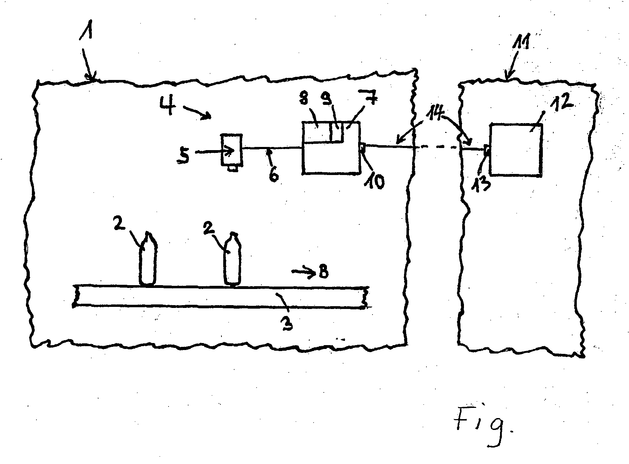

Mit Hilfe der in der Figur dargestellten Vorrichtung kann das erfindungsgemäße Verfahren wie folgt ausgeführt werden.

Beispielsweise bei der Installation der Inspektionsvorrichtung 4 in der zugehörigen Fabrikhalle mit dem Leerflaschenbandförderer 3 werden von dem für die Montage der Vorrichtung 4 zuständigen Personal mit Hilfe der Kamera 5 und dem angeschlossenen Auswertungsrechner 7 Aufnahmen von Testobjekten, beispielsweise von Testflaschen gemacht. So können verschiedene Aufnahmen der Testflaschen unter verschiedenen Aufnahmebedingungen gemacht werden. Diese Daten werden anschließend in dem ROM-Speicher 9 als Referenzbilddaten nicht überschreibbar gespeichert. Alternativ könnten sie auch auf der Festplatte 8 gespeichert werden.

Nach dieser Montage mit der Abspeicherung von Referenzbilddaten in einem nicht-flüchtigen Speicher des Rechners 7 kann die Inspektionsvorrichtung schließlich in der Fabrikhalle am Ort 1 in Betrieb genommen werden.

Der Inspektionsvorgang selbst läuft dabei in an sich bekannter Weise ab, indem die Flaschen 2 auf dem Laufband 3 in Transportrichtung B zu dem Inspektionsmodul 4 zur Kontrolle des Halsbereiches der Flaschen 2 transportiert werden. Die Flaschen werden dabei einzeln in den Abbildungsbereich der Aufnahmekamera 5 des Moduls 4 geführt und jeweils ein Einzelbild der momentanen dort befindlichen Flasche 2 gemacht.

Dann werden im Inspektionsmodul 4 von der Kamera 5 digitale Bilddaten des aufgenommenen erfassten Bildes erzeugt und dem Bildauswertungsrechner 7 mittels der Verbindungsleitung 6 zugeführt. Die übermittelten digitalen Bilddaten werden anschließend von dem auf dem Rechner 7 gespeicherten Auswertungsprogramm bei einer gegebenen Parametereinstellung ausgewertet, um fehlerhafte Gefäße zu erkennen. Die Parametereinstellung kann hierbei entweder von einer Bedienperson vorher festgelegt sein, oder auch während eines Auswertungsvorgangs oder zwischen verschiedenen Auswertungsvorgängen von einer Bedienperson geändert werden, um die Auswertung zu optimieren.

Während eines Zeitraums, in dem gerade keine von der Kamera 5 erfassten digitalen Bilddaten von dem Auswertungsprogramm ausgewertet werden, können z.B. routinemäßig in bestimmen Abständen oder von einer Bedienperson zu einem bestimmten Zeitpunkt gerade festgelegt, die in dem Speicher 8 oder 9 vorgespeicherten Referenzbilddaten in das Auswertungsprogramm auf dem Rechner 7 eingegeben werden.

Die so eingegebenen Referenzbilddaten werden nachfolgend in dem Auswertungsprogramm bei derselben Parametereinstellung ausgewertet, die auch für das Auswerten der erfassten Bilddaten verwendet wird. Das heißt, die somit eingegebenen Referenzbilddaten von "fiktiven" Testflaschen, die tatsächlich während der laufenden Funktionskontrolle nicht auf dem Laufband 3 im Bereich der Inspektionsmodule 4 vorhanden sind und von diesen nicht aufgenommen werden, werden anschließend von dem Auswertungsprogramm bei derselben Parametereinstellung ausgewertet, die auch für das Auswerten der durch die Kamera 5 erfassten Bilddaten verwendet wird. Dieser Vorgang kann auch im Inspektionsbetrieb vollautomatisch fortlaufend oder in größeren Zeitintervallen zwischen den Bildaufnahmen aufeinander folgender Flaschen stattfinden.

Somit erfolgt diese Auswertung der Referenzbilddaten beispielsweise indem die Parametersätze des Auswertungsprogramms zugrunde gelegt werden, die für den zuletzt durchgeführten Inspektionsvorgang mit der Auswertung der zuletzt durch die Kamera 5 erfassten Bilddaten verwendet wurde.

Je nach Ergebnis dieser Auswertung der Referenzbilddaten kann z.B. die Bedienperson erkennen, ob die Parameter des Programms in unerwünschter Weise zu sehr von den für eine präzise und gewünschte Auswertung notwendigen Bereichen abweichen. Es wäre auch denkbar, dass anschließend die Parametereinstellungen des Auswertungsprogramms so automatisch geändert werden, bis die Auswertung der momentan eingegebenen Referenzbilddaten ein gewünschtes Ergebnis erzielen.

Während vorstehend der Fall beschrieben wurde, dass die Referenzbilddaten bereits vor der Durchführung des eigentlichen Inspektionsvorgangs und der zugehörigen Kontrolle des Funktionierens dieses Vorgangs im Speicher 8, 9 des Rechners 7 vorgespeichert waren, ist alternativ oder zusätzlich auch der folgende Fall denkbar.

Mittels der Datenfernübertragungseinrichtungen, d.h. der Schnittstellen 10, 13 und der Modemverbindungsleitung 14, könnten zu einem beliebigen Zeitpunkt von einer Person am Ort 11, die somit nicht im Bereich der Fabrik am Ort 1 ist, per Datenfernübertragung vom Rechner 12 die Referenzbilddaten erst in den Rechner 7 zur anschließenden Auswertung zugeleitet werden.

Wie im vorigen Fall auch, könnten diese Referenzbilddaten entweder Daten von vorher mit dem Inspektionsmodul aufgenommenen Testflaschen sein. Alternativ könnten diese Referenzbilddaten aber auch andere Merkmale aufweisen, die zum Testen des korrekten Funktionierens des Auswertungsprogramms dienen können.

Das heißt, es muss nicht unbedingt im zugehörigen Referenzbild eine Testflasche an sich abgebildet sein, sondern es könnten auch andere Gegenstände verwendet werden oder computererzeugte Grafiken als Referenzbilddaten verwendet werden, die z.B. gewisse Helligkeitsverteilungen aufweisen, die zum Erkennen von fehlerhaften Parametereinstellungen im Auswertungsprogramm nützlich sind.

Die erfindungsgemäße Vorrichtung und das erfindungsgemäße Verfahren ermöglichen folglich, das korrekte Funktionieren des Auswertungsprogramms des Inspektionssystems auf einfache Weise sicher und reproduzierbar zu überprüfen.

## Patentansprüche

1. Verfahren zur Überprüfung des korrekten Funktionierens des Inspektionsvorgangs von Gefäßen (2) wie Flaschen, Dosen oder dgl., bei dem ein zu untersuchendes Gefäß (2) zumindest teilweise optisch erfasst und die erfassten Bilddaten mit einem Auswertungsprogramm ausgewertet werden, um fehlerhafte Gefäße zu erkennen, **dadurch gekennzeichnet, dass** in einem nichtflüchtigen Speicher (8, 9) eines Rechners (7) vorgespeicherte Referenzbilddaten in das Auswertungsprogramm eingegeben werden, die strukturell den erfassten Bilddaten entsprechen und die von dem Auswertungsprogramm bei derselben Parametereinstellung des Auswertungsprogramms ausgewertet werden, die auch für das Auswerten der erfassten Bilddaten verwendeten wird.

2. Verfahren nach Anspruch 1, **dadurch gekennzeichnet, dass** als Referenzbilddaten Bilddaten von fehlerhaften Gefäßen verwendet werden.

3. Verfahren nach Anspruch 1 oder 2, **dadurch gekennzeichnet, dass** die Referenzbilddaten zur Eingabe in das Auswertungsprogramm per Datenfernübertragung zugeleitet werden.

4. Verfahren nach mindestens einem Ansprüche 1 bis 3, **dadurch gekennzeichnet, dass** in Abhängigkeit von dem Auswertungsergebnis der Referenzbilddaten die Parametereinstellung des Auswertungsprogramms geändert wird.

5. Verfahren nach mindestens einem der Ansprüche 1 bis 4, **dadurch gekennzeichnet, dass** die Auswertung der Referenzbilddaten durch das Auswertungsprogramm zumindest teilweise oder vollständig dann erfolgt, wenn die optisch erfassten Bilddaten nicht mit dem Auswertungsprogramm ausgewertet werden.

6. Inspektionsvorrichtung (4) für Gefäße (2) wie Flaschen, Dosen oder dergl., mit einer Messeinheit (5) zur optischen Erfassung von zumindest einem Teil des zu untersuchenden Gefäßes (2) und einem computergestützten Auswertungssystem (7) mit Auswertungsprogramm zum Auswerten der von der Messeinheit (5) erfassten Bilddaten, um fehlerhafte Gefäße zu erkennen, mit einer Einrichtung zur Eingabe von in einem nichtflüchtigen Speicher (8, 9) eines Rechners (7) des computergestützten Auswertungssystems (7) vorgespeicherten Referenzbilddaten in das Auswertungsprogramm, wobei das Auswertungssystem geeignet ist, die erfassten Bilddaten und die Referenzbilddaten mit gleichen Parametereinstellungen auszuwerten **dadurch gekennzeichnet, dass**
die Inspektionsvorrichtung (4) so konfiguriert ist, dass sie das Verfahren zur Überprüfung des korrekten Funktionierens des Inspektionsvorgangs von Gefäßen (2) wie Flaschen, Dosen oder dgl. gemäß einem der vorherigen Ansprüche durchführen kann.

7. Inspektionsvorrichtung nach Anspruch 6, **dadurch gekennzeichnet, dass** die Referenzbilddaten in einem ROM-Speicher(9) des Rechners (8, 9) vorgespeichert sind.

8. Inspektionsvorrichtung nach Anspruch 6 oder 7, **dadurch gekennzeichnete dass** das computergestützte Auswertungssystem (7) als Einrichtung zur Eingabe von Referenzbilddaten einen Anschluss (10) zur Eingabe von Referenzbilddaten per Datenfernübertragung umfasst.

## Claims

1. A method of checking on correct functioning of the inspection of containers (2) such as bottles, cans or the like, where a container (2) to be tested is detected optically at least in part and the detected image data is analyzed with an analysis program to detect defective containers, **characterized in that** reference image data stored in advance in a nonvolatile memory (8, 9) of a computer (7) is input into the analysis program, this reference image data corresponding structurally to the detected image data and being analyzed by the analysis program at the same parameter setting of the analysis program which is also used for analyzing the detected image data.

2. The method according to claim 1, **characterized in that** image data from defective containers is used as the reference image data.

3. The method according to claim 1 or 2, **characterized in that** the reference image data is sent to the analysis program by remote data transmission for input into the program.

4. The method according to at least one of claims 1 through 3, **characterized in that** the parameter setting of the analysis program is altered as a function of the result of the analysis of the reference image data.

5. The method according to at least one of claims 1 through 4, **characterized in that** the analysis of the reference image data by the analysis program is performed entirely or at least in part when the optically detected image data is not being analyzed by the analysis program.

6. An inspection device (4) for containers (2) such as bottles, cans or the like, having a measuring unit (5) for optical detection of at least a part of the container (2) to be tested and a computer assisted analysis system (7) having an analysis program for analyzing the image data detected by the measuring unit (5) in order to detect defective containers, comprising a device for input of reference image data into the analysis program, the reference image data being stored in advance in a nonvolatile memory (8, 9) of a computer (7) of the computer assisted analysis system (7), where said analysis system is suited to analyze the detected image data and the reference image data at the same parameter settings, **characterized in that** the inspection device (4) is configured to perform the method of checking on correct functioning of the inspection of containers (2) such as bottles, cans or the like according to one of the preceding claims.

7. The inspection device according to claim 6, **characterized in that** the reference image data is stored in advance in a ROM memory (9) of the computer (8, 9).

8. The inspection device according to claim 6 or 7, **characterized in that** the computer assisted analysis system (7) includes as the device for input of reference image data a connection (10) for input of reference image data by remote data transmission.

## Revendications

1. Procédé de contrôle du fonctionnement correct d'une opération d'inspection de récipients ou contenants (2) tels que des bouteilles, des boites ou canettes ou similaires, d'après lequel on effectue un relevé optique au moins partiel d'un contenant (2) à inspecter, et les données d'image relevées sont traitées à l'aide d'un programme de traitement de données en vue de détecter des contenants défectueux, **caractérisé en ce que** l'on introduit dans le programme de traitement de données, des données d'image de référence préenregistrées dans une mémoire non volatile (8, 9) d'un calculateur (7), qui correspondent structurellement aux données d'image relevées, et sont traitées par le programme de traitement de données pour le même réglage de paramètres du programme de traitement de données, que celui également utilisé pour le traitement des données d'image relevées.

2. Procédé selon la revendication 1, **caractérisé en ce que** concernant les données d'image de référence, on utilise des données d'image de contenants défectueux.

3. Procédé selon la revendication 1 ou la revendication 2, **caractérisé en ce que** les données d'image de référence pour l'introduction dans le programme de traitement de données, sont amenées par transmission de données à distance.

4. Procédé selon l'une au moins des revendications 1 à 3, **caractérisé en ce qu'**en fonction du résultat de traitement des données d'image de référence, on fait varier le réglage des paramètres du programme de traitement des données.

5. Procédé selon l'une au moins des revendications 1 à 4, **caractérisé en ce que** le traitement des données d'image de référence par le programme de traitement de données est effectué au moins partiellement ou en totalité, lorsque les données d'image relevées par voie optique ne sont pas traitées avec le programme de traitement de données.

6. Dispositif d'inspection (4) pour des contenants (2) tels que des bouteilles, des boites ou canettes ou similaires, comprenant une unité de mesure (5) pour effectuer un relevé optique d'au moins une partie du contenant (2) à inspecter, et un système de traitement de données (7) assisté par ordinateur avec un programme de traitement de données pour traiter les données d'image relevées à l'aide de l'unité de mesure (5) en vue de détecter des contenants défectueux, l'ensemble comprenant en outre un dispositif pour introduire dans le programme de traitement de données, des données d'image de référence préenregistrées dans une mémoire non volatile (8, 9) d'un calculateur (7) du système de traitement de données (7) assisté par ordinateur, le système de traitement de données étant adapté à traiter les données d'image relevées et les données d'image de référence avec les mêmes réglages de paramètres, **caractérisé en ce que**
le dispositif d'inspection (4) est configuré de manière à pouvoir mettre en oeuvre le procédé de contrôle du fonctionnement correct de l'opération d'inspection de récipients ou contenants (2) tels que des bouteilles, des boites ou canettes ou similaires, selon l'une des revendications précédentes.

7. Dispositif d'inspection selon la revendication 6, **caractérisé en ce que** les données d'image de référence sont préenregistrées dans une mémoire ROM (9) du calculateur (8, 9).

8. Dispositif d'inspection selon la revendication 6 ou la revendication 7, **caractérisé en ce que** le système de traitement de données (7) assisté par ordinateur comporte en guise de dispositif d'introduction de données d'image de référence, un raccord de branchement (10) pour l'introduction de données d'image de référence par transmission de données à distance.
